# EUROPEAN PATENT APPLICATION

(11) **EP 4 763 536 A1**
(43) Date of publication of application: **24.06.2026**
(21) Application number: 25222175.9
(22) Date of filing: 10.12.2025
(51) Int. Cl.: B60C 11/03, B60C 11/12, B60C 11/13

(54) **PNEUMATIC TIRE**

(30) Priority: 19.12.2024 JP 2024224184; 19.12.2024 JP 2024224185
(71) Applicant: Toyo Tire Corporation, Itami-shi, Hyogo 664-0847 (JP)
(72) Inventor: ONISHI, Kizashi, Hyogo, 664-0847 (JP)
(74) Representative: Müller-Boré & Partner Patentanwälte PartG mbB

(57) **Abstract**

[Problem to be solved]

To provide a pneumatic tire including bridges capable of effectively reducing the likelihood that blocks collapse.

[Solution]

A tire 1 has a tread 2 including first bridges 61 provided in first main grooves 21. Each first bridge 61 couples a rear first center block 311 to a front first center block 312, each first bridge 61 being connected to an end portion 331 of a first edge 33 of the rear first center block 311, the end portion 331 being located closer to a tire equator S1 in a direction in which the first main groove 21 extends, and each first bridge 61 being connected to an intermediate portion 341 of a second edge 34 of the front first center block 312, the intermediate portion 341 being located intermediately in the direction in which the first main groove 21 extends.

## Description

### BACKGROUND OF THE INVENTION

### Field of the Invention

The present invention relates to a pneumatic tire having a tread.

### Related Art

A typical pneumatic tire includes a tread having a tread surface that contacts with a road surface. The tread is provided with a block pattern in which a plurality of blocks defined by grooves extending in the tire circumferential direction and grooves intersecting therewith are arranged in the tire circumferential direction (see, for example, PCT International Publication No. WO 2014/084320).

Patent Document 1: PCT International Publication No. WO2014/084320

### SUMMARY OF THE INVENTION

The tire pattern described in PCT International Publication No. WO 2014/084320 has raised groove bottom portions (bridges) that connect the blocks to each other. Each raised groove bottom portion has a smaller height than the blocks, and reinforces one or both of the blocks connected by the raised groove bottom portion.

Two blocks connected by such a bridge respectively function as a "reinforced block" and a "reinforced block" depending on the direction in which a force acts. The "reinforcing block" may be subjected to a greater load in comparison with a case where the bridge is not provided. Under such a load, the "reinforcing block" may collapse, reducing the ground contact area, whereby the braking performance and dynamic performance may deteriorate.

The raised groove bottom portions reduce collapse of the blocks. When the collapse of the blocks is reduced, the block edges easily come into contact with the ground, and the braking capability and the driving capability of the tire are improved. On the other hand, in the tire pattern described in PCT International Publication No. WO 2014/084320, the raised groove bottom portions connect two blocks in the tire circumferential direction to suppress the collapse of the blocks in the tire circumferential direction, but do not suppress collapse of the blocks in the other directions.

An object of the present invention is to provide a pneumatic tire capable of reducing malfunction that can be caused when a load is applied to blocks connected to each other by bridges.

An object of the present invention is to provide a pneumatic tire capable of effectively reducing the likelihood of collapse of blocks by means of bridges.

A pneumatic tire according to an embodiment of the present invention includes a tread and has a specified rotation direction. The tread includes:
a plurality of first main grooves extending from a first grounding end toward a tire equator and inclined with respect to a tire axial direction;
a plurality of second main grooves extending from a second grounding end toward the tire equator and inclined with respect to the tire axial direction;
   the plurality of first main grooves having leading ends located closer to the tire equator, the leading ends of the plurality of the first main grooves merging with the plurality of the second main grooves, and
   the plurality of second main grooves having leading ends located closer to the tire equator, the leading ends of the plurality of the second main grooves merging with the plurality of the first main grooves,
first blocks each defined by two first main grooves of the plurality of first main grooves, the second main groove with which the two first main grooves merge, and one of a plurality of first sub-grooves;
second blocks each defined by two second main grooves of the plurality of second main grooves, the first main groove with which the two second main grooves merge, and one of a plurality of second sub-grooves; and
first bridges and second bridges, the first bridges being provided in the plurality of first main grooves, the second bridges being provided in the plurality of second main grooves. Each of the first bridges couples one first block to an other first block located forward of the one first block in a rotation direction, each of the first bridges being connected to an end portion of a rotation-direction front edge of the one first block, the end portion being located closer to the tire equator in a direction in which the first main groove extends, and each of the first bridges being connected to an intermediate portion of a rotation-direction rear edge of the other first block, the intermediate portion being located intermediately in the direction in which the first main groove extends, and
each of the second bridges couples one second block to an other second block located forward of the one second block in the rotation direction, each of the second bridges being connected to an end portion of a rotation-direction front edge of the one second block, the end portion being located closer to the tire equator in a direction in which the second main groove extends, and each of the second bridges being connected to an intermediate portion of a rotation-direction rear edge of the other second block, the intermediate portion being located intermediately in the direction in which the second main groove extends.

A pneumatic tire according to an embodiment of the present invention includes a tread and has a specified rotation direction. The tread includes:
a plurality of first main grooves extending from a first grounding end toward a tire equator and inclined with respect to a tire axial direction;
a plurality of second main grooves extending from a second grounding end toward the tire equator and inclined with respect to the tire axial direction;
   the plurality of first main grooves having leading ends closer to the tire equator, the leading ends of the plurality of the first main grooves merging with the plurality of the second main grooves, and
   the plurality of second main grooves having leading ends closer to the tire equator, the leading ends of the plurality of the second main grooves merging with the plurality of the first main grooves,
first blocks each defined by two first main grooves of the plurality of first main grooves, the second main groove with which the two first main grooves merge, and one of a plurality of first sub-grooves;
second blocks each defined by two second main grooves of the plurality of second main grooves, the first main groove with which the two second main grooves merge, and one of a plurality of second sub-grooves;
first bridges each disposed to lie in one first main groove of the plurality of first main grooves and one second main groove of the plurality of the second main grooves, and each connected to two sides of a corresponding one of the first blocks; and
second bridges each disposed to lie in one first main groove of the plurality of first main grooves and one second main groove of the plurality of second main grooves, and each connected to two sides of a corresponding one of the second blocks.

The present invention provides a pneumatic tire capable of reducing malfunction that can be caused when a load is applied to blocks connected to each other by bridges.

The present invention can provide a pneumatic tire capable of effectively reducing the likelihood of collapse of blocks by means of bridges.

### BRIEF DESCRIPTION OF THE DRAWINGS

FIG. 1 is a development of a portion of an outer peripheral surface of a pneumatic tire according to a first embodiment, as viewed in plan view;
FIG. 2 is a partially enlarged view of FIG. 1;
FIG. 3 is a development of a portion of an outer peripheral surface of a pneumatic tire according to a second embodiment, as viewed in plan view;
FIG. 4 is a partially enlarged view of FIG. 3, and illustrates a part of a tread pattern;
FIG. 5 is a diagram illustrating a part of a tread pattern on a pneumatic tire according to a third embodiment;
FIG. 6 is a diagram illustrating a part of a tread pattern on a pneumatic tire according to a fourth embodiment;
FIG. 7 is a diagram illustrating a part of a tread pattern on a pneumatic tire according to a fifth embodiment;
FIG. 8 is a diagram illustrating a part of a tread pattern on a pneumatic tire according to a sixth embodiment; and
FIG. 9 is a diagram illustrating a part of a tread pattern on a pneumatic tire according to a seventh embodiment.

### DETAILED DESCRIPTION OF THE INVENTION

### First Embodiment

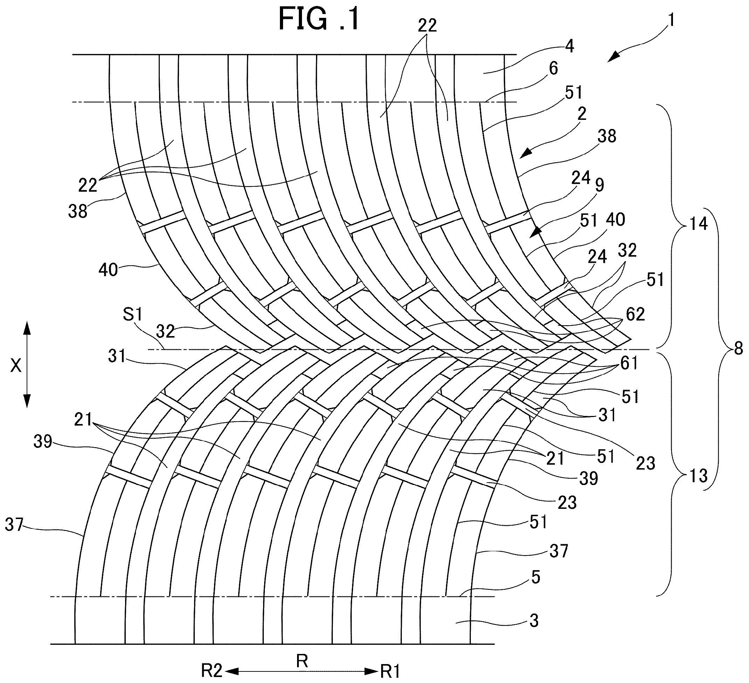

A pneumatic tire 1 according to a first embodiment will be described with reference to FIG. 1. FIG. 1 is a development of a portion of an outer peripheral surface of the pneumatic tire 1 according to the first embodiment, as viewed in plan view. The tire 1 is applicable not only as tires for a passenger car, but also as tires for other various types of vehicles such as light trucks, trucks, and buses.

The tire 1 is a directional tire having a specified rotation direction for a vehicle fitted with the tire 1 to move forward. FIG. 1 shows a tire rotation direction R (also referred to as a tire circumferential direction) of the tire 1, together with a rotation-direction front side R1 (or a leading side) and a rotation-direction rear side R2 (or a trailing side).

FIG. 1 also shows a tire axial direction X (also referred to as a tire width direction). The tire axial direction X is parallel to a rotation axis of the tire 1.

As illustrated in FIG. 1, the tire 1 includes a tread 2. The tire 1 further includes a first shoulder 3 and a second shoulder 4 on opposite sides of the tread 2 in the tire axial direction. Each of the first shoulder 3 and the second shoulder 4 is a transitional portion from the tread 2 to a respective one of sidewalls (not shown) on opposite sides in the tire axial direction, and corresponds to a shoulder of the tire 1.

The first shoulder 3 has a first grounding end 5, and the second shoulder 4 has a second grounding end 6. The first grounding end 5 and the second grounding end 6 are defined as opposite ends in the tire axial direction of a region of the tire 1 that contacts with a flat road surface when a predetermined load is applied to the tire 1 in use in a state of being mounted on a regular rim and filled with air to have a regular internal pressure. In the case of a tire for a passenger car, the predetermined load corresponds to 88% of the regular load.

### Tread Pattern

The tread 2 has a tread surface 8 that contacts with a road surface. The tread surface 8 has a tread pattern 9 formed thereon. A main design of the tread pattern 9 is composed of a plurality of main grooves (described later), a plurality of sub-grooves (described later), and a plurality of blocks (described later) defined by the main grooves and sub-grooves. The blocks are portions protruding outward in tire radial directions, and are generally called lands.

FIG. 1 shows a tire equator S1, which is an imaginary line extending along the tire rotation direction R and passing through the center in the tire axial direction of the tread surface 8. The tire equator S1 is located equidistant from the first grounding end 5 and the second grounding end 6.

The tread surface 8 includes a first tread surface 13 adjacent to the first shoulder 3 and a second tread surface 14 adjacent to the second shoulder 4 with the tire equator S1 as the boundary therebetween.

### Grooves in Tread Pattern

The main grooves include a plurality of first main grooves 21 extending from the first grounding end 5 toward the tire equator S1, and a plurality of second main grooves 22 extending from the second grounding end 6 toward the tire equator S1. The first main grooves 21 are mainly formed in the first tread surface 13, and the second main grooves 22 are mainly formed in the second tread surface 14. The first main grooves 21 extend from one side in the tire axial direction X toward the tire equator S1, and are arranged at intervals in the tire rotation direction R. The second main grooves 22 extend from the other side in the tire axial direction X toward the tire equator S1, and are arranged at intervals in the tire rotation direction R. Here, for each first main groove 21, the end adjacent to the first grounding end 5 is defined as a base end, and the end adjacent to the tire equator S1 is defined as a leading end. For each second main groove 22, the end adjacent to the second grounding end 6 is defined as a base end, and the end adjacent to the tire equator S1 is defined as a leading end.

Each first main groove 21 is inclined in its entirety with respect to the tire axial direction X. More specifically, each first main groove 21 extends from the first grounding end 5 toward the tire equator S1 such that it gradually curves convexly toward the rotation-direction rear side R2 and then extends toward the rotation-direction front side R1. In each first main groove 21, a portion closer to the tire equator S1 has a larger inclination angle with respect to the tire axial direction X than a portion closer to the first grounding end 5.

Each second main grooves 22 is inclined in its entirety with respect to the tire axial direction X. More specifically, each second main groove 22 extends from the second grounding end 6 toward the tire equator S1 such that it gradually curves convexly toward the rotation-direction rear side R2 and then extends toward the rotation-direction front side R1. In each second main groove 22, a portion closer to the tire equator S1 has a larger inclination angle with respect to the tire axial direction X than a portion closer to the second grounding end 6.

As described above, the first main grooves 21 and the second main grooves 22 gradually become along the tire axial direction X so that their inclination with respect to the tire axial direction X become gentle, in a direction from the tire equator S1 to the first grounding end 5 or the second grounding end 6. The inclination angle of the first main grooves 21 and the second main grooves 22 with respect to the tire axial direction X is, for example, 30° or more and 60° or less or 40° or more and 50° or less in their portion closer to the tire equator S1.

The leading ends of the plurality of first main grooves 21 terminate in such a manner as to merge with the second main grooves 22 immediately before reaching the tire equator S1.

The leading ends of the plurality of second main grooves 22 terminate in such a manner as to merge with the first main grooves 21 immediately before reaching the tire equator S1.

The sub-grooves include first sub-grooves 23 each establishing communication between a pair of first main grooves 21 adjacent to each other in the tire rotation direction R, and second sub-grooves 24 each establishing communication between a pair of second main grooves 22 adjacent to each other in the tire rotation direction R. The first sub-grooves 23 are formed in the first tread surface 13, and the second sub-grooves 24 are formed in the second tread surface 14.

The widths (maximum widths) of the first sub-grooves 23 and the second sub-grooves 24 are narrower than those of the first main grooves 21 and the second main grooves 22. The first sub-grooves 23 are inclined with respect to the tire rotation direction R in such a manner as to become gradually apart from the first grounding end 5 from the rotation-direction front side R1 toward the rotation-direction rear side R2. The second sub-grooves 24 are inclined with respect to the tire rotation direction R in such a manner as to become gradually apart from the second grounding end 6 from the rotation-direction front side R1 toward the rotation-direction rear side R2. The first sub-grooves 23 and the second sub-grooves 24 may be shallower than, deeper than, or the same in depth as the first main grooves 21 and the second main grooves 22.

The first main grooves 21 and the second main grooves 22 have the same or similar shape and configuration, and the first sub-grooves 23 and the second sub-grooves 24 have the same or similar shape and configuration.

### Blocks in Tread Pattern

The plurality of blocks include a plurality of first center blocks 31 that are arranged centrally in the tire axial direction X. Each of the first center blocks 31 has a substantially rectangular shape defined by two first main grooves 21, the second main groove 22 with which the two first main grooves 21 merge, and the corresponding first sub-groove 23.

The plurality of blocks include a plurality of second center blocks 32 that are arranged centrally in the tire axial direction X. Each of the second center blocks 32 has a substantially rectangular shape defined by two second main grooves 22, the first main groove 21 with which the two second main grooves 22 merge, and the corresponding second sub-groove 24.

The first center blocks 31 and the second center blocks 32 are alternately arranged in a staggered manner in the tire rotation direction R. More specifically, the first center blocks 31 and the second center blocks 32 are arranged such that each of them extends on both the first tread surface 13 and the second tread surface 14. In other words, the tire equator S1 passes through the first center blocks 31 and the second center blocks 32.

The plurality of first center blocks 31 are mainly present on the first tread surface 13. The plurality of second center blocks 32 are mainly present on the second tread surface 14.

For example, in the tread pattern 9 in plan view, the first center blocks 31 and the second center blocks 32 are arranged symmetrically with respect to the tire equator S1 and are shifted from one another by a predetermined pitch in the tire rotation direction R. The shape of the first center blocks 31 is the same as the shape of the second center blocks 32 inverted with respect to the tire equator S1 (the same applies to the first main grooves 21 and the second main grooves 22). The tread pattern 9 of the present embodiment is balanced well in tire axial direction and is effective in improving steering stability.

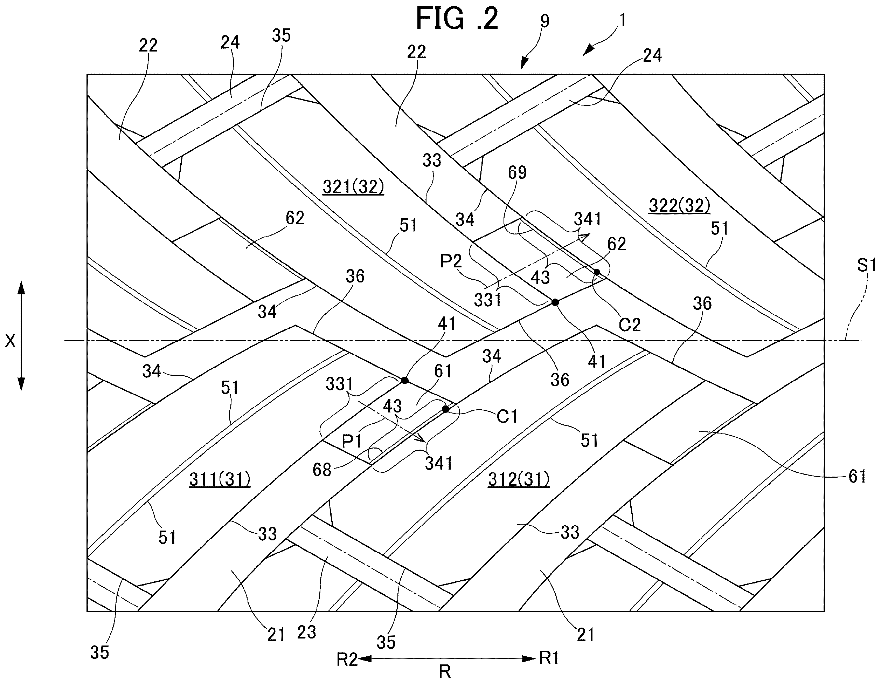

As illustrated in FIG. 2, each first center block 31 has a substantially rectangular shape, and has a first edge 33, a second edge 34, a third edge 35, and a fourth edge 36. The first edge 33 and the second edge 34 are long sides facing each other. The first edge 33 is a rotation-direction front edge, and the second edge 34 is a rotation-direction rear edge. The third edge 35 and the fourth edge 36 are short sides facing each other. The third edge 35 is a rotation-direction rear edge, and the fourth edge 36 is a rotation-direction front edge. More specifically, the first edge 33 is slightly concavely curved in plan view. The second edge 34 is slightly convexly curved in plan view. An end portion of each first center block 31 (a rotation-direction front portion including the fourth edge 36) is smaller in width than the rest. Each first center block 31 has in its entirety such a tapered shape that the distance in the short side direction decreases from a rotation-direction rear portion (a portion located away from the tire equator S1 and including the third edge 35) toward the rotation-direction front portion (the portion adjacent to the tire equator S1 and including the fourth edge 36).

As illustrated in FIG. 2, each second center block 32 has a substantially rectangular shape, and has a first edge 33, a second edge 34, a third edge 35, and a fourth edge 36. The first edge 33 and the second edge 34 are long sides facing each other. The first edge 33 is a rotation-direction front edge, and the second edge 34 is a rotation-direction rear edge. The third edge 35 and the fourth edge 36 are short sides facing each other. The third edge 35 is a rotation-direction rear edge, and the fourth edge 36 is a rotation-direction front edge. More specifically, the first edge 33 is slightly concavely curved in plan view. The second edge 34 is slightly convexly curved in plan view. An end portion of each second center block 32 (a rotation-direction front portion including the fourth edge 36) is smaller in width than the rest. Each second center block 32 has in its entirety such a tapered shape that the distance in the short side direction decreases from a rotation-direction rear portion (a portion located away from the tire equator S1 and including the third edge 35) toward the rotation-direction front portion (the portion adjacent to the tire equator S1 and including the fourth edge 36).

The plurality of blocks further include a plurality of first shoulder blocks 37 and a plurality of second shoulder blocks 38 arranged on outer sides in the tire axial direction. The plurality of blocks further include a plurality of first intermediate blocks 39 and a plurality of second intermediate blocks 40 arranged at intermediate positions in the tire axial direction.

Each first shoulder block 37 has a substantially rectangular shape defined by a pair of first main grooves 21 adjacent to each other in the tire rotation direction R and the corresponding first sub-groove 23. An edge of each first shoulder block 37 adjacent to the first shoulder 3 is continuous with the outer surface of the first shoulder 3.

Each second shoulder block 38 has a substantially rectangular shape defined by a pair of second main grooves 22 adjacent to each other in the tire rotation direction R and the corresponding second sub-groove 24. An edge of each second shoulder block 38 adjacent to the second shoulder 4 is continuous with the outer surface of the second shoulder 4.

The first intermediate blocks 39 are arranged on the first tread surface 13. The second intermediate blocks 40 are arranged on the second tread surface 14.

Each first intermediate block 39 has a substantially rectangular shape defined by a pair of first main grooves 21 adjacent to each other in the tire rotation direction R and the corresponding pair of first sub-grooves 23. The plurality of first intermediate blocks 39 are arranged in the tire rotation direction R with the first main grooves 21 interposed therebetween.

Each second intermediate block 40 has a substantially rectangular shape defined by a pair of second main grooves 22 adjacent to each other in the tire rotation direction R and the corresponding pair of second sub-grooves 24. The plurality of second intermediate blocks 40 are arranged in the tire rotation direction R with the second main grooves 22 interposed therebetween.

Each of the blocks has a center sipe 51 formed thereon. For example, the center sipe 51 of the first center block 31 extends substantially parallel to the first edge 33 and the second edge 34. The center sipe 51 is formed at a substantially middle position between the first edge 33 and the second edge 34, and extends in a direction obliquely intersecting with the tire rotation direction R.

The center sipe 51 is open at the surface of the block, and the depth direction of the center sipe 51 is substantially along the tire radial direction.

Each center sipe 51 is a groove having a width narrower than the first main grooves 21, the second main grooves 22, the first sub-grooves 23, and the second sub-grooves 24. The maximum groove width of each center sipe 51 is, for example, 0.3 mm or more and 2.0 mm or less.

The depth of each center sipe 51 is measured as a linear distance from a surface opening to a bottom surface thereof. The sipe depth is set to, for example, 30% or more and 80% or less of the depth of the first main groove 21.

As illustrated in FIG. 2, the center sipe 51 is open at the opposite sides of the first center block 31. Specifically, the opposite ends of the center sipe 51 are open at the third edge 35 and the fourth edge 36 of the first center block 31, respectively.

### Bridges

As shown in FIG. 2, the tread pattern 9 further includes first bridges 61 provided in the first main grooves 21 and second bridges 62 provided in the second main grooves 22. FIG. 2 is a partially enlarged view of FIG. 1. Each first bridge 61 is a raised bottom portion formed of a protrusion on the groove bottom of the first main groove 21. Each second bridge 62 is a raised bottom portion formed of a protrusion on the groove bottom of the second main groove 22.

Each first bridge 61 connects the first center blocks 31 that are adjacent in the tire rotation direction R and have the first main groove 21 interposed therebetween to each other. Thus, the first center blocks 31 and the first bridges 61 are alternately arranged in the tire rotation direction R. This arrangement can effectively reduce the likelihood that the first center blocks 31 collapse.

Each second bridge 62 connects the second center blocks 32 that are adjacent in the tire rotation direction R and have the second main groove 22 interposed therebetween to each other. Thus, the second center blocks 32 and the second bridges 62 are alternately arranged in the tire rotation direction R. This arrangement can effectively reduce the likelihood that the second center blocks 32 collapse.

In the following description, two first center blocks 31 connected to each other are referred to as a "rear first center block 311" and a "front first center block 312", respectively. The front first center block 312 is located toward the rotation-direction front side R1 with respect to the rear first center block 311. Two second center blocks 32 connected to each other are referred to as a "rear second center block 321" and a "front second center block 322", respectively. The front second center block 322 is located toward the rotation-direction front side R1 with respect to the rear second center block 321.

The first bridge 61 extends between the rear first center block 311 and the front first center block 312 (in a direction P1), and is inclined with respect to the tire rotation direction R. The second bridge 62 extends between the rear second center block 321 and the front second center block 322 (in a direction P2), and is inclined with respect to the tire rotation direction R.

The height of the first bridge 61 and the second bridge 62 is, for example, 20% or more and 60% or less of the depth of the first main groove 21 and the second main groove 22. The height of the first bridge 61 and the second bridge 62 is the height of their upper surface determined with reference to the bottom surface of the corresponding main groove. The depth of the first main groove 21 and the second main groove 22 is the depth to the bottom surface determined with reference to the surface of the first center block 31 and the second center block 32.

A positional relationship between the rear first center block 311 and the front first center block 312 connected to each other by each first bridge 61 will be described in detail. The rear first center block 311 and the front first center block 312 are arranged with the first main groove 21 interposed therebetween. The rear first center block 311 and the front first center block 312 extend at an angle with respect to the tire rotation direction R toward the tire equator S1. The front first center block 312 is shifted with respect to the rear first center block 311, toward the tire equator S1 in the direction in which the first main groove 21 extends. As a result, a portion of the first edge 33 of the rear first center block 311 closer to the tire equator S1 and a portion of the second edge 34 of the front first center block 312 away from the tire equator S1 face each other in a direction intersecting with the direction in which the first main groove 21 extends.

A structure in which each first bridge 61 connects the rear first center block 311 and the front first center block 312 will be described in more detail.

The first bridge 61 is disposed in the first main groove 21 and is connected to the first edge 33 of the rear first center block 311. The first bridge 61 is formed over the entire groove width of the first main groove 21, thereby coupling the rear first center block 311 to the front first center block 312 in the tire rotation direction R.

The first bridge 61 connects the first edge 33 of the rear first center block 311 and the second edge 34 of the front first center block 312. More specifically, the first bridge 61 is connected to an edge-extending-direction end portion 331 (hereinafter, referred to as the end portion 331) of the first edge 33 of the rear first center block 311, and is connected to an edge-extending-direction intermediate portion 341 (hereinafter, referred to as the intermediate portion 341) of the second edge 34 of the front first center block 312.

The end portion 331 is a region including a corner vertex 41 that is an intersection point of the first edge 33 and the fourth edge 36 of the rear first center block 311, and extends along the first main groove 21 by a predetermined length. The end portion 331 has a length of 20% or more and 90% or less of the length of the first edge 33. Further, the end portion 331 may be spaced apart from an end of the first edge 33. The end portion 331 is provided in a region spaced apart from the end of the first edge 33 by a length of 20% or less of the length of the first edge 33.

In the present embodiment, the end portion 331 includes the corner vertex 41 of the rear first center block 311. However, the end portion 331 may be spaced apart from the corner vertex 41.

The intermediate portion 341 is a portion of the second edge 34 of the front first center block 312 and is connected to the first bridge 61. The intermediate portion 341 has a length of 20% or more and 90% or less of the length of the second edge 34. The intermediate portion 341 includes a portion 43 located further away from the tire equator S1 with respect to a center C1 of the second edge 34 in the direction in which the first main groove 21 extends.

As described above, the first bridge 61 is connected to the intermediate portion 341 of the second edge 34 of the front first center block 312. That is, the first bridge 61 is connected to a portion where the front first center block 312 has a high strength. Therefore, although the front first center block 312 functions as the "reinforcing block" during braking that involves application of a large load, the front first center block 312 is less likely to tilt even when such a large load is applied from the first bridge 61 to a trailing side portion (a portion closer to the second edge 34) of the front first center block 312 during braking.

As described above, the first bridge 61 extends in the direction P1 that is inclined with respect to the tire rotation direction R. Therefore, during braking that involves application of a large load, a tire-rotation-direction load component acting on the trailing side portion (the portion closer to the second edge 34) of the front first center block 312 decreases, making it possible to reduce the likelihood that a large load acts on the front first center block 312. Furthermore, although the rear first center block 311 functions as the "reinforcing block" during acceleration, a tire-rotation-direction load component acting on the rear first center block 311 from the first bridge 61 during acceleration decreases, making it possible to reduce the likelihood that a large load acts on the rear first center block 311.

Each first bridge 61 has a first sipe 68. The first sipe 68 is formed in the vicinity of the boundary with the front first center block 312. The first sipe 68 moderately reduces the block rigidity, so that the tread 2 can be flexibly grounded even if a road surface has a protrusion due to a stone or the like or a curvature. Here, the "vicinity of the boundary with the front first center block 312" refers to a portion in contact with the front first center block 312 and a region slightly apart therefrom.

The first sipe 68 is a groove having a narrower width than the first main groove 21, the second main groove 22, the first sub-groove 23, and the second sub-groove 24. The maximum groove width of the first sipe 68 is, for example, 0.3 mm or more and 3.0 mm or less.

The depth of the first sipe 68 is measured as a linear distance from a surface opening to a bottom surface thereof. The sipe depth is set to, for example, 20% or more and 90% or less of the depth of the first main groove 21.

As illustrated in FIG. 2, each first sipe 68 is open at opposite ends thereof in the direction in which the first main groove 21, where the first bridge 61 is provided, extends.

A positional relationship between the rear second center block 321 and the front second center block 322 connected to each other by each second bridge 62 will be described in detail. The rear second center block 321 and the front second center block 322 are arranged with the second main groove 22 interposed therebetween. The rear second center block 321 and the front second center block 322 extend at an angle with respect to the tire rotation direction R toward the tire equator S1. The front second center block 322 is shifted with respect to the rear second center block 321, toward the tire equator S1 in the direction in which the second main groove 22 extends. As a result, a portion of the first edge 33 of the rear second center block 321 closer to the tire equator S1 and a portion of the second edge 34 of the front second center block 322 away from the tire equator S1 face each other in a direction intersecting with the direction in which the second main groove 22 extends.

A structure in which each second bridge 62 connects the rear second center block 321 and the front second center block 322 will be described in more detail.

The second bridge 62 is disposed in the second main groove 22 and is connected to the first edge 33 of the rear second center block 321. The second bridge 62 is formed over the entire groove width of the second main groove 22, thereby coupling the rear second center block 321 to the front second center block 322 in the tire rotation direction R.

The second bridge 62 connects the first edge 33 of the rear second center block 321 and the second edge 34 of the front second center block 322. More specifically, the second bridge 62 is connected to an edge-extending-direction end portion 331 (hereinafter referred to as the end portion 331) of the first edge 33 of the rear second center block 321, and is connected to an edge-extending-direction intermediate portion 341 (hereinafter referred to as the intermediate portion 341) of the second edge 34 of the front second center block 322.

The end portion 331 is a region including a corner vertex 41 that is an intersection point of the first edge 33 and the fourth edge 36 of the rear second center block 321, and extends along the second main groove 22 by a predetermined length. The end portion 331 has a length of 20% or more and 90% or less of the length of the first edge 33. Further, the end portion 331 may be spaced apart from an end of the first edge 33. The end portion 331 is provided in a region spaced apart from the end of the first edge 33 by a length of 20% or less of the length of the first edge 33.

In the present embodiment, the end portion 331 includes the corner vertex 41 of the rear second center block 321. However, the end portion 331 may be spaced apart from the corner vertex 41 of the first edge 33.

The intermediate portion 341 is a portion of the second edge 34 of the front second center block 322 and is connected to the second bridge 62. The intermediate portion 341 has a length of 20% or more and 90% or less of the length of the second edge 34. The intermediate portion 341 includes a portion 43 located further away from the tire equator S1 with respect to a center C2 of the second edge 34 in the direction in which the second main groove 22 extends.

As described above, the second bridge 62 is connected to the intermediate portion 341 of the second edge 34 of the front second center block 322. That is, the second bridge 62 is connected to a portion where the front second center block 322 has a high strength. Therefore, although the front second center block 322 functions as the "reinforcing block" during braking that involves application of a large load, the front second center block 322 is less likely to tilt even when such a large load is applied from the second bridge 62 to a trailing side portion (a portion closer to the second edge 34) of the front second center block 322 during braking.

As described above, the second bridge 62 extends in the direction P2 that is inclined with respect to the tire rotation direction R. Therefore, during braking that involves application of a large load, a tire-rotation-direction load component acting on the trailing side portion (the portion closer to the second edge 34) of the front second center block 322 decreases, making it possible to reduce the likelihood that a large load acts on the front second center block 322. Furthermore, although the rear second center block 321 functions as the "reinforcing block" during acceleration, a tire-rotation-direction load component acting on the rear second center block 321 from the second bridge 62 during acceleration decreases, making it possible to reduce the likelihood that a large load acts on the rear second center block 321.

Each second bridge 62 has a second sipe 69. The second sipe 69 is formed in the vicinity of the boundary with the front second center block 322. The second sipe 69 moderately reduces the block rigidity, so that the tread 2 can be flexibly grounded even if a road surface has a protrusion due to a stone or the like or a curvature. Here, the "vicinity of the boundary with the front second center block 322" refers to a portion in contact with the front second center block 322 and a region slightly apart therefrom.

The second sipe 69 is a groove having a narrower width than the first main groove 21, the second main groove 22, the first sub-groove 23, and the second sub-groove 24. The maximum groove width of the second sipe 69 is, for example, 0.3 mm or more and 2.0 mm or less.

The depth of the second sipe 69 is measured as a linear distance from a surface opening to a bottom surface thereof. The sipe depth is set to, for example, 30% or more and 80% or less of the depth of the first main groove 21.

As illustrated in FIG. 2, each second sipe 69 is open at opposite ends thereof in the direction in which the second main groove 22, where the second bridge 62 is provided, extends.

Outline of the Present Embodiment
(1) The tire 1 (pneumatic tire) includes the tread 2 and has a specified rotation direction. The tread 2 includes: the plurality of first main grooves 21 extending from the first grounding end 5 toward the tire equator S1 and inclined with respect to the tire axial direction X; and the plurality of second main grooves 22 extending from the second grounding end 6 toward the tire equator S1 and inclined with respect to the tire axial direction X. The first main grooves 21 have leading ends located closer to the tire equator S1 and merging with the second main grooves 22. The second main grooves 22 have leading ends located closer to the tire equator S1 and merging with the first main grooves 21. The first center blocks 31 are each defined by two first main grooves 21, the second main groove 22 with which the two first main grooves 21 merge, and one of the plurality of first sub-grooves 23. The second center blocks 32 are each defined by two second main grooves 22, the first main groove 21 with which the two second main grooves 22 merge, and one of the plurality of second sub-grooves 24. The tread 2 further includes the first bridges 61 and the second bridges 62, the first bridges 61 being provided in the first main grooves 21, the second bridges 62 being provided in the second main groove 22. Each of the first bridges 61 couples the rear first center block 311 (first center block) to the front first center block 312 (rotation-direction front block) located toward the rotation-direction front side R1 with respect to the rear first center block 311, each of the first bridges 61 being connected to the end portion 331 of the first edge 33 (rotation-direction front edge) of the rear first center block 311, the end portion 331 being located closer to the tire equator S1 in the direction in which the first main groove 21 extends, and each of the first bridges 61 being connected to the intermediate portion 341 of the second edge 34 (rotation-direction rear edge) of the front first center block 312, the intermediate portion 341 being located intermediately in the direction in which the first main groove 21 extends. Each of the second bridges 62 couples the rear second center block 321 to the front second center block 322 (rotation-direction front block) located toward the rotation-direction front side R1 with respect to the rear second center block 321, each of the second bridges 62 being connected to the edge-extending-direction end portion 331 (end portion) of the first edge 33 (rotation-direction front edge) of the rear second center block 321, the edge-extending-direction end portion 331 being located closer to the tire equator S1 in the direction in which the second main groove 22 extends, and each of the second bridges 62 being connected to the edge-extending-direction intermediate portion 341 (intermediate portion) of the second edge 34 (rotation-direction rear edge) of the front second center block 322, the edge-extending-direction intermediate portion 341 being located intermediately in the direction in which the second main groove 22 extends. This configuration makes it possible to reduce, for a tire having a specified direction, malfunction that can be caused when a load is applied to blocks connected to each other by bridges.
(2) In the tire 1 (pneumatic tire), the direction P1 in which each first bridge 61 extends between the first center blocks 31 is inclined with respect to the tire rotation direction R (tire circumferential direction), and the direction P2 in which each second bridge 62 extends between the second center blocks 32 is inclined with respect to the tire rotation direction R (tire circumferential direction). This configuration makes it possible to more efficiently reduce, for a tire having a specified rotation direction, malfunction that can be caused when a load is applied to blocks connected to each other by bridges.
(3) In the tire 1 (pneumatic tire) according to (1) or (2), the intermediate portion 341 (portion of the second edge 34 of the first center block 31 to which the first bridge 61 is connected) includes a portion further apart from the tire equator S1 with respect to the center C1 of the second edge 34 in the direction in which the first main groove 21 extends, and
   the intermediate portion 341 (portion of the second edge 34 of the second center block 32 to which the second bridge 62 is connected) includes a portion further apart from the tire equator S1 with respect to the center C2 of the second edge 34 in the direction in which the second main groove 22 extends. This configuration makes it possible to more efficiently reduce, for a tire having a specified rotation direction, malfunction that can be caused when a load is applied to blocks connected to each other by bridges.
(4) In the tire 1 (pneumatic tire) according to any one of (1) to (3), each first bridge 61 has the first sipe 68 in the vicinity of the boundary with the first center block 31, and
   each second bridge 62 has the second sipe 69 in the vicinity of the boundary with the second center block 32. This configuration makes it possible to moderately reduce the block rigidity, so that the tread can be flexibly grounded even if a road surface has a protrusion due to a stone or the like or curvature.

### Other Embodiments and Modifications

In the foregoing, the first embodiment of the present invention has been described. However, the present invention is not limited to the above embodiment, and various modifications can be made without departing from the spirit of the present invention. In particular, two or more of the embodiments and modifications described in this specification can be arbitrarily combined as necessary.

The blocks described above have a substantially rectangular shape in plan view, but the present invention is not limited thereto.

The blocks may have a sipe or a shallow groove.

The sipe of each bridge may be formed in the vicinity of the boundary with the end of the center block closer to the rotation-direction rear side R2.

Each bridge may have a further sipe or a shallow groove. Each bridge may have no sipe.

### Second Embodiment

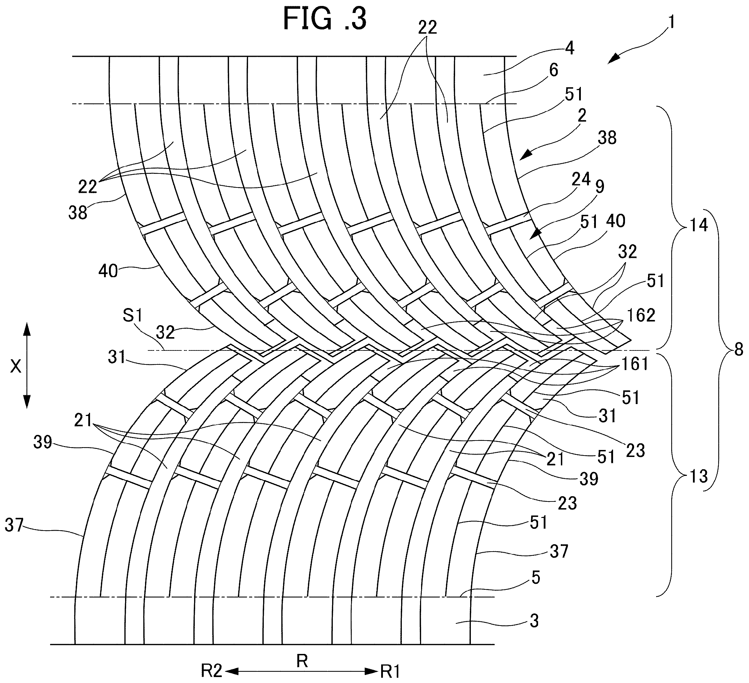

A pneumatic tire 1 according to a second embodiment will be described with reference to FIG. 3. FIG. 3 is a development of a portion of an outer peripheral surface of the pneumatic tire 1 according to the second embodiment, as viewed in plan view. The tire 1 is applicable not only as tires for a passenger car, but also as tires for other various types of vehicles such as light trucks, trucks, and buses.

The tire 1 is a directional tire having a specified rotation direction for a vehicle fitted with the tire 1 to move forward. FIG. 3 shows a tire rotation direction R (also referred to as a tire circumferential direction) of the tire 1, together with a rotation-direction front side R1 (or a leading side) and a rotation-direction rear side R2 (or a trailing side).

FIG. 3 also shows a tire axial direction X (also referred to as a tire width direction). The tire axial direction X is parallel to a rotation axis of the tire 1.

As illustrated in FIG. 3, the tire 1 includes a tread 2. The tire 1 further includes a first shoulder 3 and a second shoulder 4 on opposite sides of the tread 2 in the tire axial direction. Each of the first shoulder 3 and the second shoulder 4 is a transitional portion from the tread 2 to a respective one of sidewalls (not shown) on opposite sides in the tire axial direction, and corresponds to a shoulder of the tire 1.

The first shoulder 3 has a first grounding end 5, and the second shoulder 4 has a second grounding end 6. The first grounding end 5 and the second grounding end 6 are defined as opposite ends in the tire axial direction of a region of the tire 1 that contacts with a flat road surface when a predetermined load is applied to the tire 1 in use in a state of being mounted on a regular rim and filled with air to have a regular internal pressure. In the case of a tire for a passenger car, the predetermined load corresponds to 88% of the regular load.

### Tread Pattern

The tread 2 has a tread surface 8 that contacts with a road surface. The tread surface 8 has a tread pattern 9 formed thereon. A main design of the tread pattern 9 is composed of a plurality of main grooves (described later), a plurality of sub-grooves (described later), and a plurality of blocks (described later) defined by the main grooves and sub-grooves. The blocks are portions protruding outward in tire radial directions, and are generally called lands.

FIG. 3 shows a tire equator S1, which is an imaginary line extending along the tire rotation direction R and passing through the center in the tire axial direction of the tread surface 8. The tire equator S1 is located equidistant from the first grounding end 5 and the second grounding end 6.

The tread surface 8 includes a first tread surface 13 adjacent to the first shoulder 3 and a second tread surface 14 adjacent to the second shoulder 4 with the tire equator S1 as the boundary therebetween.

### Grooves in Tread Pattern

The main grooves include a plurality of first main grooves 21 extending from the first grounding end 5 toward the tire equator S1, and a plurality of second main grooves 22 extending from the second grounding end 6 toward the tire equator S1. The first main grooves 21 are mainly formed in the first tread surface 13, and the second main grooves 22 are mainly formed in the second tread surface 14. The first main grooves 21 extend from one side in the tire axial direction X toward the tire equator S1, and are arranged at intervals in the tire rotation direction R. The second main grooves 22 extend from the other side in the tire axial direction X toward the tire equator S1, and are arranged at intervals in the tire rotation direction R. Here, for each first main groove 21, the end adjacent to the first grounding end 5 is defined as a base end, and the end adjacent to the tire equator S1 is defined as a leading end. For each second main groove 22, the end adjacent to the second grounding end 6 is defined as a base end, and the end adjacent to the tire equator S1 is defined as a leading end.

Each first main groove 21 is inclined in its entirety with respect to the tire axial direction X. More specifically, each first main groove 21 extends from the first grounding end 5 toward the tire equator S1 such that it gradually curves convexly toward the rotation-direction rear side R2 and then extends toward the rotation-direction front side R1. In each first main groove 21, a portion closer to the tire equator S1 has a larger inclination angle with respect to the tire axial direction X than a portion closer to the first grounding end 5.

Each second main grooves 22 is inclined in its entirety with respect to the tire axial direction X. More specifically, each second main groove 22 extends from the second grounding end 6 toward the tire equator S1 such that it gradually curves convexly toward the rotation-direction rear side R2 and then extends toward the rotation-direction front side R1. In each second main groove 22, a portion closer to the tire equator S1 has a larger inclination angle with respect to the tire axial direction X than a portion closer to the second grounding end 6.

As described above, the first main grooves 21 and the second main grooves 22 gradually become along the tire axial direction X so that their inclination with respect to the tire axial direction X become gentle, in a direction from the tire equator S1 to the first grounding end 5 or the second grounding end 6. The inclination angle of the first main grooves 21 and the second main grooves 22 with respect to the tire axial direction X is, for example, 30° or more and 60° or less or 40° or more and 50° or less in their portion closer to the tire equator S1.

The leading ends of the plurality of first main grooves 21 terminate in such a manner as to merge with the second main grooves 22 immediately before reaching the tire equator S1.

The leading ends of the plurality of second main grooves 22 terminate in such a manner as to merge with the first main grooves 21 immediately before reaching the tire equator S1.

The sub-grooves include first sub-grooves 23 each establishing communication between a pair of first main grooves 21 adjacent to each other in the tire rotation direction R, and second sub-grooves 24 each establishing communication between a pair of second main grooves 22 adjacent to each other in the tire rotation direction R. The first sub-grooves 23 are formed in the first tread surface 13, and the second sub-grooves 24 are formed in the second tread surface 14.

The widths (maximum widths) of the first sub-grooves 23 and the second sub-grooves 24 are narrower than those of the first main grooves 21 and the second main grooves 22. The first sub-grooves 23 are inclined with respect to the tire rotation direction R in such a manner as to become gradually apart from the first grounding end 5 from the rotation-direction front side R1 toward the rotation-direction rear side R2. The second sub-grooves 24 are inclined with respect to the tire rotation direction R in such a manner as to become gradually apart from the second grounding end 6 from the rotation-direction front side R1 toward the rotation-direction rear side R2. The first sub-grooves 23 and the second sub-grooves 24 may be shallower than, deeper than, or the same in depth as the first main grooves 21 and the second main grooves 22.

The first main grooves 21 and the second main grooves 22 have the same or similar shape and configuration, and the first sub-grooves 23 and the second sub-grooves 24 have the same or similar shape and configuration.

### Blocks in Tread Pattern

The plurality of blocks include a plurality of first center blocks 31 that are arranged centrally in the tire axial direction X. Each of the first center blocks 31 has a substantially rectangular shape defined by two first main grooves 21, the second main groove 22 with which the two first main grooves 21 merge, and the corresponding first sub-groove 23.

The plurality of blocks include a plurality of second center blocks 32 that are arranged centrally in the tire axial direction X. Each of the second center blocks 32 has a substantially rectangular shape defined by two second main grooves 22, the first main groove 21 with which the two second main grooves 22 merge, and the corresponding second sub-groove 24.

The first center blocks 31 and the second center blocks 32 are alternately arranged in a staggered manner in the tire rotation direction R. More specifically, the first center blocks 31 and the second center blocks 32 are arranged such that each of them extends on both the first tread surface 13 and the second tread surface 14. In other words, the tire equator S1 passes through the first center blocks 31 and the second center blocks 32.

The plurality of first center blocks 31 are mainly present on the first tread surface 13. The plurality of second center blocks 32 are mainly present on the second tread surface 14.

For example, in the tread pattern 9 in plan view, the first center blocks 31 and the second center blocks 32 are arranged symmetrically with respect to the tire equator S1 and are shifted from one another by a predetermined pitch in the tire rotation direction R. The shape of the first center blocks 31 is the same as the shape of the second center blocks 32 inverted with respect to the tire equator S1 (the same applies to the first main grooves 21 and the second main grooves 22). The tread pattern 9 of the present embodiment is balanced well in tire axial direction and is effective in improving steering stability.

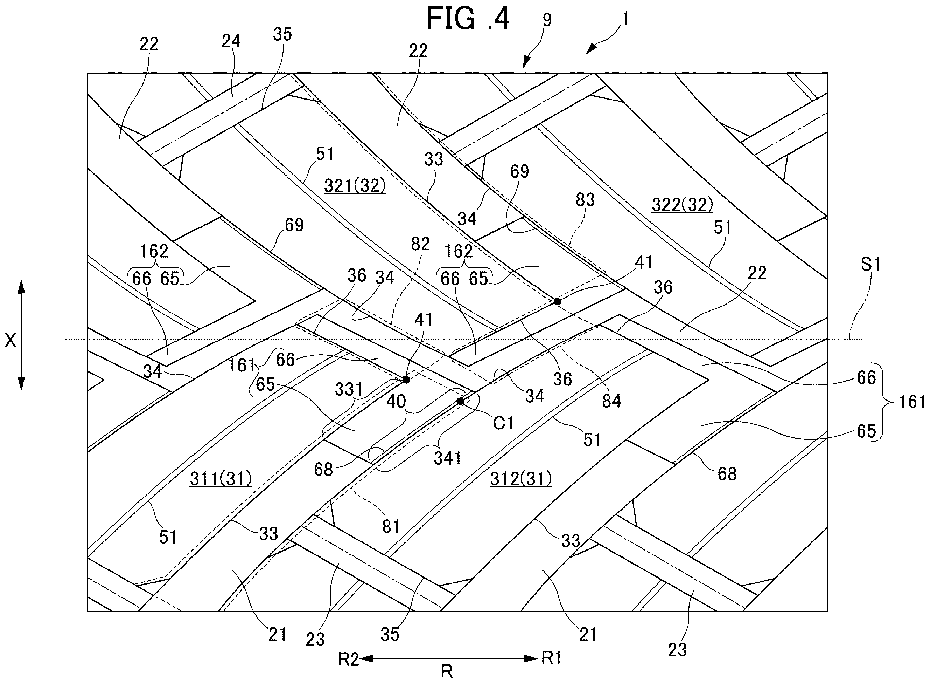

As illustrated in FIG. 4, each first center block 31 has a substantially rectangular shape, and has a first edge 33, a second edge 34, a third edge 35, and a fourth edge 36. The first edge 33 and the second edge 34 are long sides facing each other. The first edge 33 is a rotation-direction front edge, and the second edge 34 is a rotation-direction rear edge. The third edge 35 and the fourth edge 36 are short sides facing each other. The third edge 35 is a rotation-direction rear edge, and the fourth edge 36 is a rotation-direction front edge. More specifically, the first edge 33 is slightly concavely curved in plan view. The second edge 34 is slightly convexly curved in plan view. An end portion of each first center block 31 (a rotation-direction front portion including the fourth edge 36) is smaller in width than the rest. Each first center block 31 has in its entirety such a tapered shape that the distance in the short side direction decreases from a rotation-direction rear portion (a portion located away from the tire equator S1 and including the third edge 35) toward the rotation-direction front portion (the portion adjacent to the tire equator S1 and including the fourth edge 36).

As illustrated in FIG. 4, each second center block 32 has a substantially rectangular shape, and has a first edge 33, a second edge 34, a third edge 35, and a fourth edge 36. The first edge 33 and the second edge 34 are long sides facing each other. The first edge 33 is a rotation-direction front edge, and the second edge 34 is a rotation-direction rear edge. The third edge 35 and the fourth edge 36 are short sides facing each other. The third edge 35 is a rotation-direction rear edge, and the fourth edge 36 is a rotation-direction front edge. More specifically, the first edge 33 is slightly concavely curved in plan view. The second edge 34 is slightly convexly curved in plan view. An end portion of each second center block 32 (a rotation-direction front portion including the fourth edge 36) is smaller in width than the rest. Each second center block 32 has in its entirety such a tapered shape that the distance in the short side direction decreases from a rotation-direction rear portion (a portion located away from the tire equator S1 and including the third edge 35) toward the rotation-direction front portion (the portion adjacent to the tire equator S1 and including the fourth edge 36).

The plurality of blocks further include a plurality of first shoulder blocks 37 and a plurality of second shoulder blocks 38 arranged on outer sides in the tire axial direction. The plurality of blocks further include a plurality of first intermediate blocks 39 and a plurality of second intermediate blocks 40 arranged at intermediate positions in the tire axial direction.

Each first shoulder block 37 has a substantially rectangular shape defined by a pair of first main grooves 21 adjacent to each other in the tire rotation direction R and the corresponding first sub-groove 23. An edge of each first shoulder block 37 adjacent to the first shoulder 3 is continuous with the outer surface of the first shoulder 3.

Each second shoulder block 38 has a substantially rectangular shape defined by a pair of second main grooves 22 adjacent to each other in the tire rotation direction R and the corresponding second sub-groove 24. An edge of each second shoulder block 38 adjacent to the second shoulder 4 is continuous with the outer surface of the second shoulder 4.

The first intermediate blocks 39 are arranged on the first tread surface 13. The second intermediate blocks 40 are arranged on the second tread surface 14.

Each first intermediate block 39 has a substantially rectangular shape defined by a pair of first main grooves 21 adjacent to each other in the tire rotation direction R and the corresponding pair of first sub-grooves 23. The plurality of first intermediate blocks 39 are arranged in the tire rotation direction R with the first main grooves 21 interposed therebetween.

Each second intermediate block 40 has a substantially rectangular shape defined by a pair of second main grooves 22 adjacent to each other in the tire rotation direction R and the corresponding pair of second sub-grooves 24. The plurality of second intermediate blocks 40 are arranged in the tire rotation direction R with the second main grooves 22 interposed therebetween.

Each of the blocks has a center sipe 51 formed thereon. For example, the center sipe 51 of the first center block 31 extends substantially parallel to the first edge 33 and the second edge 34. The center sipe 51 is formed at a substantially middle position between the first edge 33 and the second edge 34, and extends in a direction obliquely intersecting with the tire rotation direction R.

The center sipe 51 is open at the surface of the block, and the depth direction of the center sipe 51 is substantially along the tire radial direction.

Each center sipe 51 is a groove having a width narrower than the first main grooves 21, the second main grooves 22, the first sub-grooves 23, and the second sub-grooves 24. The maximum groove width of each center sipe 51 is, for example, 0.3 mm or more and 2.0 mm or less.

The depth of each center sipe 51 is measured as a linear distance from a surface opening to a bottom surface thereof. The sipe depth is set to, for example, 30% or more and 80% or less of the depth of the first main groove 21.

As illustrated in FIG. 4, the center sipe 51 is open at the opposite sides of the first center block 31. Specifically, the opposite ends of the center sipe 51 are open at the third edge 35 and the fourth edge 36 of the first center block 31, respectively.

### Bridges

As shown in FIG. 4, the tread pattern 9 further includes first bridges 161 provided in the first main grooves 21 and second bridges 162 provided in the second main grooves 22. FIG. 4 is a partially enlarged view of FIG. 3. Each first bridge 161 is a raised bottom portion formed of a protrusion on the groove bottom of the first main groove 21. Each second bridge 162 is a raised bottom portion formed of a protrusion on the groove bottom of the second main groove 22.

Each first bridge 161 connects the first center blocks 31 that are adjacent in the tire rotation direction R and have the first main groove 21 interposed therebetween to each other. Thus, the first center blocks 31 and the first bridges 161 are alternately arranged in the tire rotation direction R. This arrangement can effectively reduce the likelihood that the first center blocks 31 collapse.

In the following description, the first center blocks 31 that are connected to each other by the first bridge 161 are referred to as a "rear first center block 311" and a "front first center block 312", respectively. The front first center block 312 is located toward the rotation-direction front side R1 with respect to the rear first center block 311.

Each second bridge 162 connects the second center blocks 32 that are adjacent in the tire rotation direction R and have the second main groove 22 interposed therebetween to each other. Thus, the second center blocks 32 and the second bridges 162 are alternately arranged in the tire rotation direction R. This arrangement can effectively reduce the likelihood that the second center blocks 32 collapse.

In the following description, the second center blocks 32 that are connected to each other by the second bridge 162 are referred to as a "rear second center block 321" and a "front second center block 322", respectively. The front second center block 322 is located toward the rotation-direction front side R1 with respect to the rear second center block 321.

The height of the first bridge 161 and the second bridge 162 is, for example, 20% or more and 600 or less of the depth of the first main groove 21 and the second main groove 22. The height of the first bridge 161 and the second bridge 162 is the height of their upper surface determined with reference to the bottom surface of the corresponding main groove. The depth of the first main groove 21 and the second main groove 22 is the depth to the bottom surface determined with reference to the surface of the first center block 31 and the second center block 32.

A positional relationship between the rear first center block 311 and the front first center block 312 connected to each other by each first bridge 161 will be described in detail. The rear first center block 311 and the front first center block 312 are arranged with the first main groove 21 interposed therebetween. The rear first center block 311 and the front first center block 312 extend at an angle with respect to the tire rotation direction R toward the tire equator S1. The front first center block 312 is shifted with respect to the rear first center block 311, toward the tire equator S1 in the direction in which the first main groove 21 extends. As a result, a portion of the first edge 33 of the rear first center block 311 closer to the tire equator S1 and a portion of the front first center block 312 away from the tire equator S1 face each other in a direction intersecting with the direction in which the first main groove 21 extends.

A structure in which each first bridge 161 connects the rear first center block 311 and the front first center block 312 will be described in more detail.

Each first bridge 161 is disposed to lie in the corresponding first main groove 21 and the corresponding second main groove 22, and is connected to the first edge 33 and the fourth edge 36, which are two sides of the corresponding rear first center block 311.

More specifically, each first bridge 161 has a first bridge portion 65 and a second bridge portion 66. The first bridge portion 65 and the second bridge portion 66 are connected to each other at an angle at which one end of first bridge portion 65 and one end of the second bridge portion 66 meet substantially perpendicularly to each other, so that the first bridge 161 has a laterally-inverted L-shape as a whole.

The first bridge portion 65 lies in the first main groove 21 and is connected to the first edge 33 of the rear first center block 311. The first bridge portion 65 is formed over the entire groove width of the first main groove 21, thereby coupling the rear first center block 311 to the front first center block 312 in the tire rotation direction R.

The first bridge portion 65 connects the first edge 33 of the rear first center block 311 and the second edge 34 of the front first center block 312. More specifically, the first bridge portion 65 is connected to an edge-extending-direction end portion 331 (hereinafter, referred to as the "end portion 331") of the first edge 33 of the rear first center block 311, and is connected to an edge-extending-direction intermediate portion 341 (hereinafter, referred to as the "intermediate portion 341") of the second edge 34 of the front first center block 312.

The second bridge portion 66 lies in the second main groove 22 and is connected to the fourth edge 36 of the rear first center block 311. The second bridge portion 66 is not formed over the entire groove width of the second main groove 22, and is spaced apart from the second center block 32 located closer to the rotation-direction front side R1.

In the present embodiment, each of the first bridges 161 described above is connected to the first edge 33 and the fourth edge 36, which are two sides of the corresponding rear first center block 311. Thus, the rear first center blocks 311 are less likely to collapse in the tire rotation direction R and the tire axial direction X. In other words, the likelihood of the collapse of the rear first center blocks 311 is effectively reduced.

In the present embodiment, each first bridge 161 protects a corner portion 41 including the intersection of the first edge 33 and the fourth edge 36 of the corresponding rear first center block 311. Therefore, for example, when an impact is applied from a bad road surface (e.g., a slushy ground or a rocky track), the corner portion 41 of each rear first center block 311 is less likely to tilt.

Each first main groove 21 has a first edge corresponding region 81 (first region) corresponding to the first edge 33 of the corresponding rear first center block 311. The first bridge 161 lies in the first edge corresponding region 81 and has an area of 30% or more of the area of the first edge corresponding region 81. Due to this configuration, the entire first center block 31 has a high strength.

Each second main groove 22 has a second edge corresponding region 82 (third region) corresponding to the fourth edge 36 of the corresponding rear first center block 311. The first bridge 161 lies in the second edge corresponding region 82 and has an area of 30% or more of the area of the second edge corresponding region 82. Due to this configuration, the entire first center block 31 has a high strength.

Each first bridge 161 has a first sipe 68. The first sipe 68 is formed in the vicinity of the boundary with the front first center block 312. Here, the "vicinity of the boundary with the front first center block 312" refers to a portion in contact with the front first center block 312 and a region slightly apart therefrom. Providing the first sipe 68 in the vicinity of an edge of the first bridge 161 reduces the likelihood that the reinforcing performance of the first bridge 161 decreases.

The first sipe 68 is a groove having a narrower width than the first main groove 21, the second main groove 22, the first sub-groove 23, and the second sub-groove 24. The maximum groove width of the first sipe 68 is, for example, 0.3 mm or more and 3.0 mm or less.

The depth of the first sipe 68 is measured as a linear distance from a surface opening to a bottom surface thereof. The sipe depth is set to, for example, 20% or more and 90% or less of the depth of the first main groove 21.

The first sipe 68 moderately reduces the block rigidity, so that the tread 2 can be flexibly grounded even if a road surface has a protrusion due to a stone or the like or a curvature.

The positional relationship between the rear second center block 321 and the front second center block 322 will be described in detail. The rear second center block 321 and the front second center block 322 are arranged with the second main groove 22 interposed therebetween. The rear second center block 321 and the front second center block 322 extend at an angle with respect to the tire rotation direction R toward the tire equator S1. The front second center block 322 is shifted with respect to the rear second center block 321, toward the tire equator S1 in the direction in which the second main groove 22 extends. As a result, a portion of the first edge 33 of the rear second center block 321 closer to the tire equator S1 and a portion of the front second center block 322 away from the tire equator S1 face each other in a direction intersecting with the direction in which the second main groove 22 extends.

A structure in which each second bridge 162 connects the rear second center block 321 and the front second center block 322 will be described in more detail.

Each second bridge 162 is disposed to lie in the corresponding first main groove 21 and the corresponding second main groove 22, and is connected to the first edge 33 and the fourth edge 36, which are two sides of the corresponding rear second center block 321.

More specifically, each second bridge 162 has a first bridge portion 65 and a second bridge portion 66. The first bridge portion 65 and the second bridge portion 66 are connected to each other at an angle at which one end of the first bridge portion 65 and one end of the second bridge portion 66 meet substantially perpendicularly to each other, so that the second bridge 162 has a laterally-inverted L-shape as a whole.

The first bridge portion 65 is connected to the first edge 33 of the rear second center block 321. The first bridge portion 65 is formed over the entire groove width of the second main groove 22, thereby coupling the rear second center block 321 to the front second center block 322 in the tire rotation direction R.

The first bridge portion 65 connects the first edge 33 of the rear second center block 321 and the second edge 34 of the front second center block 322. More specifically, the first bridge portion 65 is connected to an edge-extending-direction end portion 331 (hereinafter, referred to as the "end portion 331") of the first edge 33 of the rear second center block 321 and an edge-extending-direction intermediate portion 341 (hereinafter, referred to as the "intermediate portion 341") of the second edge 34 of the front second center block 322.

The second bridge portion 66 lies in the first main groove 21 and is connected to the fourth edge 36 of the rear second center block 321. The second bridge portion 66 is not formed over the entire groove width of the first main groove 21, and is spaced apart from the first center block 31 located closer to the rotation-direction front side R1.

In the present embodiment, each of the second bridges 162 described above is connected to the first edge 33 and the fourth edge 36, which are two sides of the corresponding rear second center block 321. Thus, the rear second center blocks 321 are less likely to collapse in the tire rotation direction R and the tire axial direction X. In other words, the likelihood of the collapse of the rear second center blocks 321 is effectively reduced.

In the present embodiment, each second bridge 162 protects a corner portion 41 including the intersection of the first edge 33 and the fourth edge 36 of the corresponding rear second center block 321. Therefore, for example, when an impact is applied from a bad road surface (e.g., a slushy ground or a rocky track), the corner portion 41 of each rear second center block 321 is less likely to tilt.

Each second main groove 22 has a third edge corresponding region 83 (second region) corresponding to the first edge 33 of the rear second center block 321. The second bridge 162 lies in the third edge corresponding region 83 and has an area of 30% or more of the area of the third edge corresponding region 83. Due to this configuration, the entire second center block 32 has a high strength.

Each first main groove 21 has a fourth edge corresponding region 84 (fourth region) corresponding to the fourth edge 36 of the corresponding rear second center block 321. The second bridge 162 lies in the fourth edge corresponding region 84 and has an area of 30% or more of the area of the fourth edge corresponding region 84. Due to this configuration, the entire second center block 32 has a high strength.

Each second bridge 162 has a second sipe 69. The second sipe 69 has the same structure as that of the center sipe 51. The second sipe 69 is formed in the vicinity of the boundary with the front second center block 322. Here, the "vicinity of the boundary with the front second center block 322" refers to a portion in contact with the front second center block 322 and a region slightly apart therefrom. Providing the second sipe 69 in the vicinity of an edge of the second bridge 162 reduces the likelihood that the reinforcing performance of the second bridge 162 decreases.

The second sipe 69 is a groove having a narrower width than the first main groove 21, the second main groove 22, the first sub-groove 23, and the second sub-groove 24. The maximum groove width of the second sipe 69 is, for example, 0.3 mm or more and 2.0 mm or less.

The depth of the second sipe 69 is measured as a linear distance from a surface opening to a bottom surface thereof. The sipe depth is set to, for example, 30% or more and 80% or less of the depth of the first main groove 21.

The second sipe 69 moderately reduces the block rigidity, so that the tread 2 can be flexibly grounded even if a road surface has a protrusion due to a stone or the like or a curvature.

In the second embodiment, the first bridges 161 can effectively reduce the likelihood that the first center blocks 31 collapse. The second bridges 162 can effectively reduce the likelihood that the second center blocks 32 collapse. In addition, the corner portions 41 of the first center blocks 31 and the second center blocks 32, which are likely to tilt due to shearing, are reinforced, thereby making it possible to prevent a decrease in the ground contact area that can be caused due to the tilting of the corner portions 41.

In a modification, the sipes may be provided along opposite edges of the respective first bridge portions 65.

### Third Embodiment

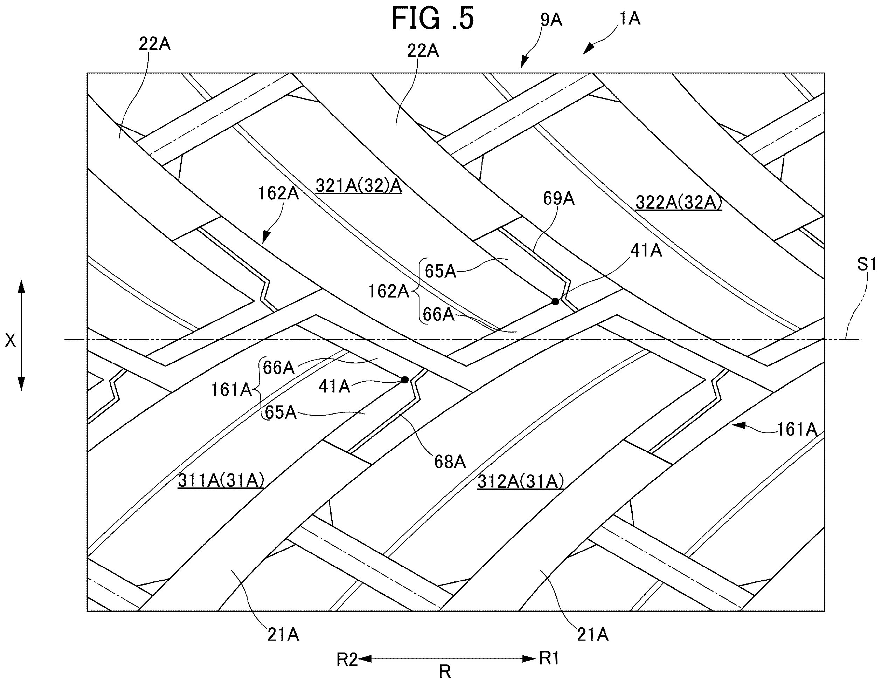

A tread pattern 9A of a tire 1A according to a third embodiment will be described with reference to FIG. 5. FIG. 5 is a diagram illustrating a part of the tread pattern on the pneumatic tire according to the third embodiment. Since the basic structure of the tread pattern 9A is the same as that of the tread pattern 9 of the second embodiment, differences will be mainly described below. In order to facilitate understanding, in the description of the third embodiment, the same or corresponding components to those of the second embodiment are denoted by the same reference numerals with "A" added thereto.

Each first bridge 161A has a first sipe 68A. Specifically, the first sipe 68A is provided in a first bridge portion 65A and extends along the direction in which a first main groove 21A extends. Both ends of the first sipe 68A are open to the first main groove 21A. The first sipe 68A has a bent portion near a corner portion 41A of a rear first center block 311A.

Each second bridge 162A has a second sipe 69A. Specifically, the second sipe 69A is provided in a first bridge portion 65A and extends along the direction in which a second main groove 22A extends. Both ends of the second sipe 69A are open to the second main groove 22A. The second sipe 69A has a bent portion near a corner portion 41A of a rear second center block 321A.

The third embodiment exerts the same effects as in the second embodiment, and is capable of reducing the likelihood of the collapse of the blocks.

### Fourth Embodiment

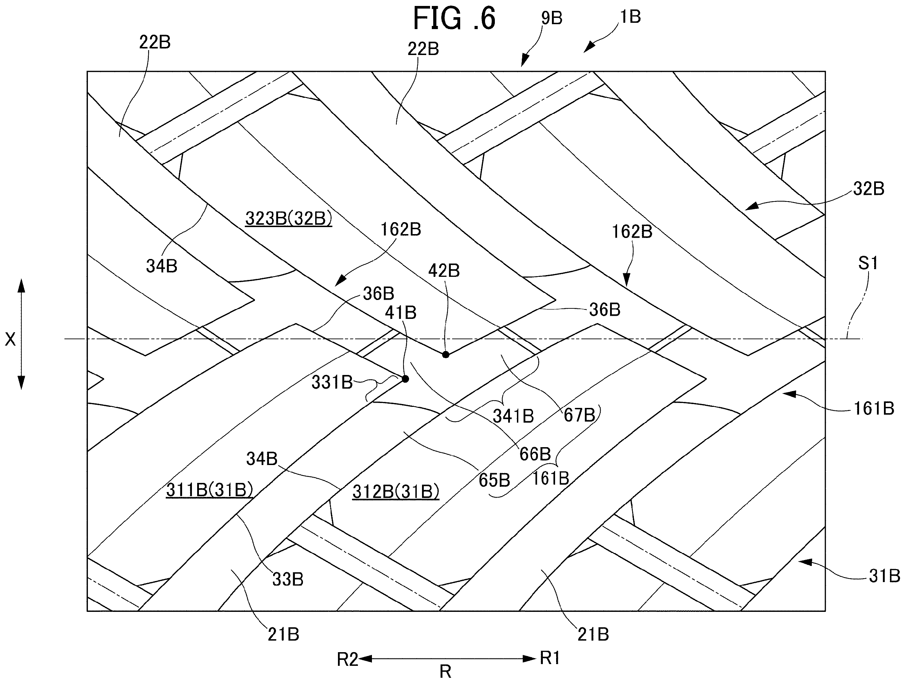

A tread pattern 9B of a tire 1B according to a fourth embodiment will be described with reference to FIG. 6. FIG. 6 is a diagram illustrating a part of the tread pattern on the pneumatic tire according to the fourth embodiment. Because the basic structure of the tread pattern 9B is the same as that of the tread pattern 9 of the second embodiment, differences will be mainly described below. In order to facilitate understanding, in the description of the fourth embodiment, the same or corresponding components to those of the second embodiment are denoted by the same reference numerals with "B" added thereto.

In the second and third embodiments, each bridge connects two blocks. In the fourth embodiment, an example in which each bridge connects three blocks will be described. In the following, a first bridge 161B will be described. Because a second bridge 162B is the same in configuration as the first bridge 161B, a description of the second bridge 162B will be omitted.

The first bridge 161B connects two first center blocks 31B and one second center block 32B. Hereinafter, the two first center blocks 31B are referred to as a "rear first center block 311B" and a "front first center block 312B", respectively. The one second center block 32B is referred to as a "front second center block 323B".

The front first center block 312B is disposed closer to the rotation-direction front side R1 with respect to the rear first center block 311B. The front second center block 323B is disposed closer to the rotation-direction front side R1 with respect to the rear first center block 311B.

The first bridge 161B connects the rear first center block 311B and the front first center block 312B that are arranged in the tire rotation direction R and have a first main groove 21B interposed therebetween to each other. Further, the first bridge 161B connects the first rear center block 311B and the first front center block 312B to the second front center block 323B. This configuration makes it possible to effectively reduce the likelihood of the collapse of the first center blocks 31B.

The following describes a structure in which the first bridge 161B connects the rear first center block 311B, the front first center block 312B, and the front second center block 323B in more detail.

The positional relationship between the rear first center block 311B and the front first center block 312B will be described in detail. The rear first center block 311B and the front first center block 312B are arranged with the first main groove 21B interposed therebetween. The rear first center block 311B and the front first center block 312B extend at an angle with respect to the tire rotation direction R toward the tire equator S1. The front first center block 312B is shifted with respect to the rear first center block 311B, toward the tire equator S1 in the direction in which the first main groove 21B extends. As a result, a portion of a first edge 33B of the rear first center block 311B closer to the tire equator S1 and a portion of a second edge 34B of the front first center block 312B away from the tire equator S1 face each other in a direction intersecting with the direction in which the first main groove 21B extends.

The positional relationship between the front second center block 323B, the rear first center block 311B, and the front first center block 312B will be described in detail. The front second center block 323B faces the front first center block 312B across the first main groove 21B, and faces the rear first center block 311B across a second main groove 22B. More specifically, a portion of a second edge 34B of the front second center block 323B closer to the tire equator S1 and a fourth edge 36B of the rear first center block 311B face each other in a direction intersecting with the direction in which the second main groove 22B extends. A fourth edge 36B of the front second center block 323B and a portion of the second edge 34B of the front first center block 312B closer to the tire equator S1 face each other in a direction intersecting with the direction in which the first main groove 21B extends.

The first bridge 161B is disposed to lie in the first main groove 21B and the second main groove 22B, and is connected to the first edge 33B and the fourth edge 36B, which are two sides of the rear first center block 311B. Further, the first bridge 161B is connected to the second edge 34B and the fourth edge 36B, which are two sides of the front second center block 323B.

More specifically, the first bridge 161B includes a first bridge portion 65B, a second bridge portion 66B, and a third bridge portion 67B.

The first bridge portion 65B lies in the first main groove 21B and is connected to the first edge 33B of the rear first center block 311B. The first bridge portion 65B is formed over the entire groove width of the first main groove 21B, thereby coupling the rear first center block 311B to the front first center block 312B in the tire rotation direction R.

The first bridge portion 65B connects the first edge 33B of the rear first center block 311B and the second edge 34B of the front first center block 312B. More specifically, the first bridge portion 65B is connected to an edge-extending-direction end portion 331B (hereinafter referred to as the "end portion 331B") of the first edge 33B of the rear first center block 311B, and is connected to an edge-extending-direction intermediate portion 341B (hereinafter referred to as the "intermediate portion 341B") of the second edge 34B of the front first center block 312B.

The second bridge portion 66B lies in the second main groove 22B and is connected to the fourth edge 36B of the rear first center block 311B. The second bridge portion 66B is formed over the entire groove width of the second main groove 22B, thereby coupling the rear first center block 311B to the front second center block 323B in the tire rotation direction R.

The second bridge portion 66B connects the fourth edge 36B of the rear first center block 311B and the second edge 34B of the front second center block 323B. More specifically, the second bridge portion 66B is connected to a portion of the fourth edge 36B of the rear first center block 311B (a portion closer to the front first center block 312B) and a portion of the front second center block 323B (a portion closer to the front first center block 312B).

The third bridge portion 67B lies in the first main groove 21 and connects the fourth edge 36B of the front second center block 323B and the second edge 34B of the front first center block 312B. More specifically, the third bridge portion 67B is connected to a portion of the fourth edge 36B of the front second center block 323B closer to the rotation-direction rear side R2, and is connected to the intermediate portion 341B of the second edge 34B of the front first center block 312B.

The first bridge 161B protects a corner portion 41B including the intersection of the first edge 33B and the fourth edge 36B of the rear first center block 311B, and a corner portion 42B including the intersection of the second edge 34B and the fourth edge 36B of the front second center block 323B. Therefore, for example, when an impact is applied from a bad road surface (e.g., a slushy ground or a rocky track), the corner portions 41B and 42B are less likely to tilt.

The fourth embodiment exerts the same effects as in the second embodiment, and is capable of reducing the likelihood of the collapse of the blocks.

### Fifth Embodiment

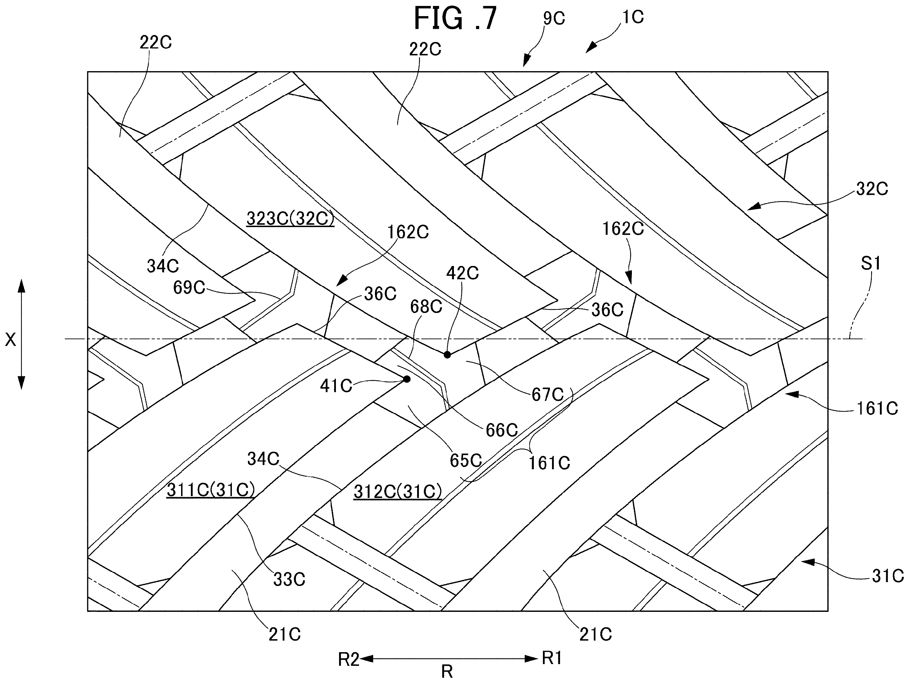

A tread pattern 9C of a tire 1C according to a fifth embodiment will be described with reference to FIG. 7. FIG. 7 is a diagram illustrating a part of the tread pattern on the pneumatic tire according to the fifth embodiment. Because the basic structure of the tread pattern 9C is the same as that of the tread pattern 9B of the fourth embodiment, differences will be mainly described below. In order to facilitate understanding, in the description of the fifth embodiment, the same or corresponding components to those of the fourth embodiment are denoted by the same reference numerals with addition of "C", instead of "B".

Each first bridge 161C has a first sipe 68C. The first sipe 68C extends from a second bridge portion 66C toward between a first bridge portion 65C and a third bridge portion 67C. The first sipe 68C has one end open to a second main groove 22C, and the other end reaching a second edge 34C of a front first center block 312C. The first sipe 68C has a bent portion near a corner portion 41C of a rear first center block 311C.

Each second bridge 162C has a second sipe 69C. Because the second sipe 69C is the same as the first sipe 68C, a description thereof will be omitted.

The fifth embodiment exerts the same effects as in the first embodiment, and is capable of reducing the likelihood of the collapse of the blocks.

### Sixth Embodiment

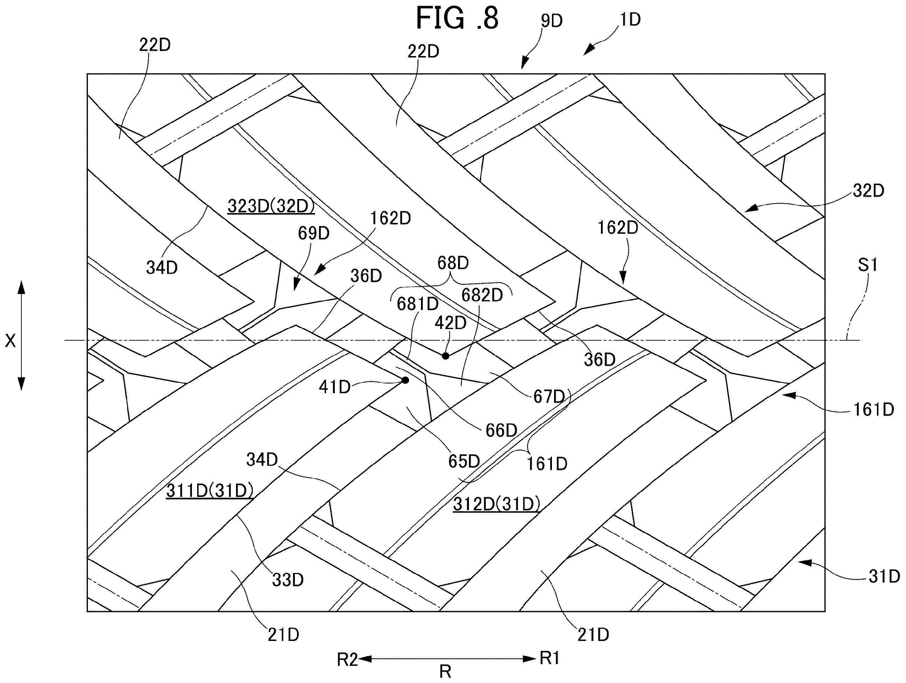

A tread pattern 9D of a tire 1D according to a sixth embodiment will be described with reference to FIG. 8. FIG. 8 is a diagram illustrating a part of the tread pattern on the pneumatic tire according to the sixth embodiment. Because the basic structure of the tread pattern 9D is the same as that of the tread pattern 9B of the fourth embodiment, differences will be mainly described below. In order to facilitate understanding, in the description of the sixth embodiment, the same or corresponding components to those of the fourth embodiment are denoted by the same reference numerals with addition of "D", instead of "B".

Each first bridge 161D has a first groove 68D. The first groove 68D extends from a second bridge portion 66D toward between a first bridge portion 65D and a third bridge portion 67D. The first groove 68D has a first portion 681D and a second portion 682D. The first portion 681D is a narrow long groove formed as a sipe, and is open to a second main groove 22D. The second portion 682D is continuous with the first portion 681D. The second portion 682D has a shape that becomes wider toward a front first center block 312D, and extends to a second edge 34D of the front first center block 312D.

Each second bridge 162D has a second groove 69D. Because the second groove 69D is the same as the first groove 68D, a description thereof will be omitted.

The sixth embodiment exerts the same effects as in the second embodiment, and is capable of reducing the likelihood of the collapse of the blocks.

### Seventh Embodiment

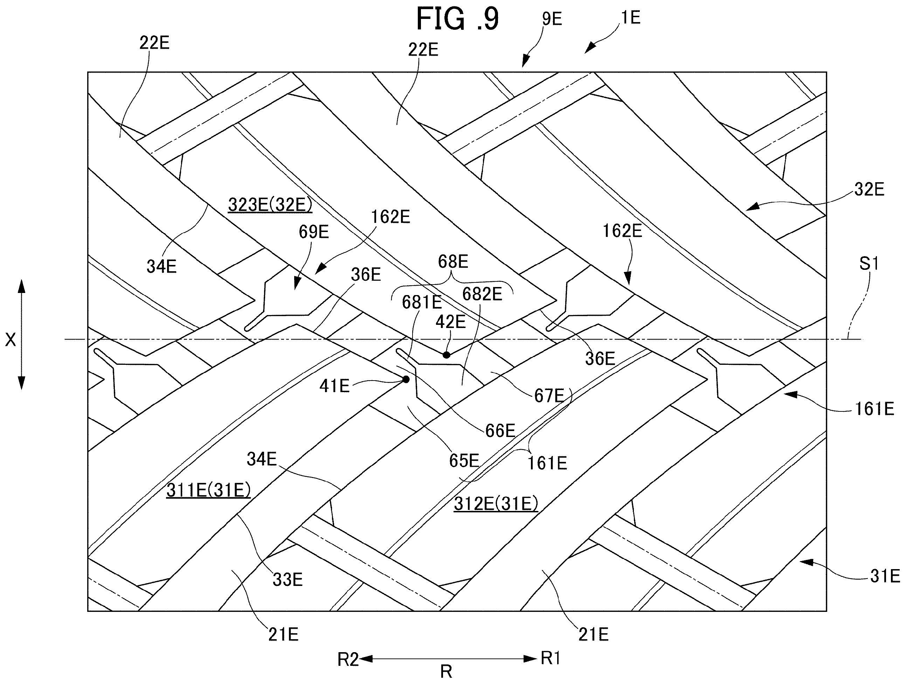

A tread pattern 9E of a tire 1E according to a seventh embodiment will be described with reference to FIG. 9. FIG. 9 is a diagram illustrating a part of the tread pattern on the pneumatic tire according to the seventh embodiment. Because the basic structure of the tread pattern 9E is the same as that of the tread pattern 9B of the fourth embodiment, differences will be mainly described below. In order to facilitate understanding, in the description of the seventh embodiment, the same or corresponding components to those of the fourth embodiment are denoted by the same reference numerals with addition of "E", instead of "B".

Each first bridge 161E has a first groove 68E. The first groove 68E extends from a second bridge portion 66E toward between a first bridge portion 65E and a third bridge portion 67E. The first groove 68E has one end terminating in a second main groove 22E, and the other end reaching a second edge 34E of a front first center block 312E.

The first groove 68E has a first portion 681E and a second portion 682E. The first portion 681E is a narrow long groove formed as a sipe, and reaches the proximity of the second main groove 22E but terminates without reaching the second main groove 22D. The second portion 682E is continuous with the first portion 681E. The second portion 682E has a shape that becomes wider toward the front first center block 312E and then extends with a constant width, and reaches the second edge 34E of the front first center block 312E.

Each second bridge 162E has a second groove 69E. Because the second groove 68E is the same as the first groove 69E, a description thereof will be omitted.

The seventh embodiment exerts the same effects as in the second embodiment, and is capable of reducing the likelihood of the collapse of the blocks

### Outline of the Present Embodiment

(5) The tire 1 (pneumatic tire) includes the tread 2 and has a specified rotation direction. The tread 2 includes:
the plurality of first main grooves 21 extending from the first grounding end 5 toward the tire equator S1 and inclined with respect to the tire axial direction X; and
the plurality of second main grooves 22 extending from the second grounding end 6 toward the tire equator S1 and inclined with respect to the tire axial direction X. The first main grooves 21 have leading ends located closer to the tire equator S1 and merging with the plurality of the second main grooves 22. The second main grooves 22 have leading ends located closer to the tire equator S1 and merging with the plurality of the first main grooves 21. The first center blocks 31 (first blocks) are each defined by two first main grooves 21, the second main groove 22 with which the two first main grooves 21 merge, and one of the plurality of first sub-grooves 23. The second center blocks 32 (second blocks) are each defined by two second main grooves 22, the first main groove 21 with which the two second main grooves 22 merge, and one of the plurality of second sub-grooves 24. The tread 2 further includes
the first bridges 161 each disposed to lie in a corresponding one of the first main grooves 21 and a corresponding one of the second main grooves 22 and each connected to two sides of a corresponding one of the first center blocks 31, and
the second bridges 162 each disposed to lie in a corresponding one of the first main grooves 21 and a corresponding one of the second main grooves 22 and each connected to two sides of a corresponding one of the second center blocks 32. Due to this feature, the likelihood of the collapse of the first center blocks 31 can be effectively reduced by the first bridges 61. Further, the likelihood of the collapse of the second center blocks 32 can be effectively reduced by the second bridges 162. By effectively reducing the likelihood of the collapse of the blocks in the tire circumferential direction and in the other directions, the block edges easily come into contact with the ground, so that the braking ability and the driving ability of the tire are improved. In addition, the corner portions 41 of the first center blocks 31 and the second center blocks 32, which are likely to tilt due to shearing, are reinforced, thereby making it possible to prevent a decrease in the ground contact area that can be caused due to the tilting of the corner portions 41.

(6) In the tire 1 (pneumatic tire) described in (5) above,
each of the first bridges 161 connects two first center blocks 31 arranged with the first main groove 21 interposed therebetween, and
each of the second bridges 162 connects corresponding two second center blocks 32 that are arranged with the second main groove 22 interposed therebetween. This configuration makes it possible to further effectively reduce the likelihood of the collapse of the first center blocks 31 and the second center blocks 32.

(7) In the tire 1 (pneumatic tire) described in (5) or (6) above,
each of the first center blocks 31 has the first edge 33 (first main-groove-side edge) in contact with the first main groove 21,
each of the first main grooves 21 has a first edge corresponding region 81 (first region) corresponding to the first edge 33, and
the first bridge 161 lies in the first edge corresponding region 81 and has an area of 30% or more of the area of the first edge-corresponding region 81; and
each of the second center blocks 32 has the first edge 33 (second main-groove-side edge) in contact with the second main groove 22,
each of second main grooves 22 has a third edge corresponding region 83 (second region) corresponding to the first edge 33, and
the second bridge 162 lies in the third edge corresponding region 83 and has an area of 30% or more of the area of the third edge corresponding region 83. This configuration makes it possible to further effectively reduce the likelihood of the collapse of the first center blocks 31 and the second center blocks 32.

(8) In the tire 1 (pneumatic tire) described in any one of (5) to (7) above,
each of the first center blocks 31 has the fourth edge 36 (third main-groove-side edge) in contact with the second main groove 22,
each of the second main grooves 22 has the second edge corresponding region 82 (third region) corresponding to the fourth edge 36,
the first bridge 161 lies in the second edge corresponding region 82 and has an area of 30% or more of the area of the second edge corresponding region 82; and
each of the second center blocks 32 has the fourth edge 36 (fourth main-groove-side edge) in contact with the first main groove 21,
each first main groove 21 has the fourth edge corresponding region 84 corresponding to the fourth edge 36, and
the second bridge 162 lies in the fourth edge corresponding region 84 and has an area of 30% or more of the area of the fourth edge corresponding region 84. This configuration makes it possible to further effectively reduce the likelihood of the collapse of the first center blocks 31 and the second center blocks 32.

(9) In the tire 1 (pneumatic tire) described in any one of (5) to (8) above,
each of the first bridges 161B connects corresponding two of the first center blocks 31B and a corresponding one of the second center blocks 32B, and
each of the second bridge 162B connects corresponding two of the second center blocks 32B and a corresponding one of the first center blocks 31B. This configuration makes it possible to further effectively reduce the likelihood of the collapse of the first center blocks 31B and the second center blocks 32B.

(10) In the tire 1 (pneumatic tire) described in any one of (5) to (9) above,
each of the first bridges 161 has the first sipe 68 in the vicinity of a boundary with the first center block 31, and
each of the second bridges 162 has the second sipe 69 in the vicinity of a boundary with the second center block 32. This configuration moderately reduces the block rigidity, so that the tread 2 can be flexibly grounded even if a road surface has a protrusion due to a stone or the like or a curvature.

### Other Embodiments and Variations

Although multiple embodiments of the present invention have been described above, the present invention is not limited to the above-described embodiments, and various modifications can be made without departing from the spirit of the present invention. In particular, the multiple embodiments and modifications described in this specification can be arbitrarily combined as necessary.

The blocks are formed in a substantially rectangular shape in plan view, but is not limited thereto.

Other sipes or shallow grooves may be formed in the blocks.

The bridges may be devoid of sipes.

### EXPLANATION OF REFERENCE NUMERALS

1: Tire (pneumatic tire)
2: Tread
5: First grounding end
6: Second grounding end
21: First main groove
22: Second main groove
23: First sub-groove
24: Second sub-groove
31: First center block (first block)
311: Rear first center block (first block)
312: Front first center block (rotation-direction front block)
32: Second center block (second block)
321: Rear second center block (second block)
322 : Front second center block (rotation-direction front block)
33: First edge (rotation-direction front edge)
34: Second edge (rotation-direction rear edge)
35: Third edge
36: Fourth edge
61: First bridge
62: Second bridge
331: Edge-extending-direction end portion (end portion)
341: Edge-extending-direction intermediate portion (intermediate portion)
R: Tire rotation direction
R1: Rotation-direction front side
R2: Rotation-direction rear side
S1: Tire equator
X: Tire axial direction

## Claims

1. A pneumatic tire (1) comprising a tread (9) and having a specified rotation direction,
the tread (9) including:
a plurality of first main grooves (21) extending from a first grounding end (5) toward a tire equator (S1) and inclined with respect to a tire axial direction;
a plurality of second main grooves (22) extending from a second grounding end (6) toward the tire equator (S1) and inclined with respect to the tire axial direction;
the plurality of first main grooves (22) having leading ends closer to the tire equator (S1), the leading ends of the plurality of the first main grooves (21) merging with the plurality of the second main grooves (22), and
the plurality of second main grooves (22) having leading ends closer to the tire equator (S1), the leading ends of the plurality of the second main grooves (22) merging with the plurality of the first main grooves (21),
first blocks (31) each defined by two first main grooves (21) of the plurality of first main grooves (21), the second main groove (22) with which the two first main grooves (21) merge, and one of a plurality of first sub-grooves (23);
second blocks (32) each defined by two second main grooves (22) of the plurality of second main grooves (22), the first main groove (21) with which the two second main grooves (22) merge, and one of a plurality of second sub-grooves (24); and
first bridges (61) and second bridges (62), the first bridges (61) being provided in the plurality of first main grooves (21), the second bridges (62) being provided in the plurality of second main grooves (22), wherein
each of the first bridges (61) couples one first block (31) to an other first block (31) located forward of the one first block (31) in a rotation direction, each of the first bridges (61) being connected to an end portion (331) of a rotation-direction front edge (33) of the one first block (31), the end portion (331) being located closer to the tire equator (S1) in a direction in which the first main groove (21) extends, and each of the first bridges (61) being connected to an intermediate portion (341) of a rotation-direction rear edge (34) of the other first block (31), the intermediate portion (341) being located intermediately in the direction in which the first main groove (21) extends, and
each of the second bridges (62) couples one second block (32) to an other second block (32) located forward of the one second block (32) in the rotation direction, each of the second bridges (62) being connected to an end portion (331) of a rotation-direction front edge (33) of the one second block (32), the end portion (331) being located closer to the tire equator (S1) in a direction in which the second main groove (22) extends, and each of the second bridges (62) being connected to an intermediate portion (341) of a rotation-direction rear edge (34) of the other second block (32), the intermediate portion (341) being located intermediately in the direction in which the second main groove (22) extends.

2. The pneumatic tire (1) of claim 1, wherein
a direction (P1) in which each of the first bridges (61) extends between the first blocks (31) is inclined with respect to a tire circumferential direction (R), and
a direction (P2) in which each of the second bridges (62) extends between the second blocks (32) is inclined with respect to the tire circumferential direction (R) .

3. The pneumatic tire (1) according to claim 1 or 2, wherein
a portion (341) of the rotation-direction rear edge (34) of the first block (31) to which the first bridge (61) is connected includes a portion further apart from the tire equator (S1) with respect to a center (C1) of the rotation-direction rear edge (34) in the direction in which the first main groove (21) extends, and
a portion (341) of the rotation-direction rear edge (34) of the second block (32) to which the second bridge (62) is connected includes a portion further apart from the tire equator (S1) with respect to a center (C2) of the rotation-direction rear edge (34) in the direction in which the second main groove (22) extends.

4. The pneumatic tire (1) according to any one of claims 1 to 3, wherein
each of the first bridges (61) has a first sipe (68) in a vicinity of a boundary with the first block (61), and
each of the second bridges (62) has a second sipe (69) in a vicinity of a boundary with the second block (32).

5. A pneumatic tire (1) comprising a tread (9) and having a specified rotation direction,
the tread (9) including:
a plurality of first main grooves (21) extending from a first grounding end (5) toward a tire equator (S1) and inclined with respect to a tire axial direction;
a plurality of second main grooves (22) extending from a second grounding end (6) toward the tire equator (S1) and inclined with respect to the tire axial direction;
the plurality of first main grooves (22) having leading ends closer to the tire equator (S1), the leading ends of the plurality of the first main grooves (21) merging with the plurality of the second main grooves (22), and
the plurality of second main grooves (22) having leading ends closer to the tire equator (S1), the leading ends of the plurality of the second main grooves (22) merging with the plurality of the first main grooves (21),
first blocks (31) each defined by two first main grooves (21) of the plurality of first main grooves (21), the second main groove (22) with which the two first main grooves (21) merge, and one of a plurality of first sub-grooves (23); second blocks (32) each defined by two second main grooves (22) of the plurality of second main grooves (22), the first main groove (21) with which the two second main grooves (22) merge, and one of a plurality of second sub-grooves (24);
first bridges (161) each disposed to lie in one first main groove (21) of the plurality of first main grooves 21) and one second main groove (22) of the plurality of the second main grooves (22), and each connected to two sides of a corresponding one of the first blocks (31); and
second bridges (162) each disposed to lie in one first main groove (21) of the plurality of first main grooves (21) and one second main groove (22) of the plurality of second main grooves (22), and each connected to two sides of a corresponding one of the second blocks (32).

6. The pneumatic tire (1) according to claim 5, wherein
each of the first bridges (161) connects corresponding two of the first blocks (31) that are arranged with a corresponding one of the first main grooves (21) interposed therebetween, and
each of the second bridges (162) connects corresponding two of the second blocks (32) that are arranged with a corresponding one of the second main grooves (22) interposed therebetween.

7. The pneumatic tire (1) according to claim 5 or 6, wherein
each of the first blocks (31) has a first main-groove-side edge (33) in contact with a corresponding one of the first main grooves (21),
each of the first main grooves (21) has a first region (81) corresponding to the first main-groove-side edge (33) of a corresponding one of the first blocks (31),
a corresponding one of the first bridges (161) lies in the first region (81) and has an area of 30% or more of an area of the first region (81),
each of the second blocks (32) has a second main-groove-side edge (33) in contact with a corresponding one of the second main grooves (22),
each of the second main grooves (22) has a second region (83) corresponding to the second main-groove-side edge (33) of a corresponding one of the second blocks (32), and
a corresponding one of the second bridges (162) lies in the second region (83) and has an area of 30% or more of an area of the second region (83).

8. The pneumatic tire (1) according to any one of claims 5 to 7, wherein
each of the first blocks (31) has a third main-groove-side edge (36) in contact with a corresponding one of the second main grooves (22),
each of the second main grooves (22) has a third region (82) corresponding to the third main-groove-side edge (36) of a corresponding one of the first blocks (31),
a corresponding one of the first bridges (161) lies in the third region (82) and has an area of 30% or more of an area of the third region (82),
each of the second blocks (32) has a fourth main-groove-side edge (36) in contact with a corresponding one of the first main grooves (21),
each of the first main grooves (21) has a fourth region (84) corresponding to the fourth main-groove-side edge (36) of a corresponding one of the second blocks (32), and
a corresponding one of the second bridges (162) lies in the fourth region (84) and has an area of 30% or more of an area of the fourth region (84).

9. The pneumatic tire (1) according to any one of claims 5 to 8, wherein
each of the first bridges (161B) connects corresponding two of the first blocks (31B) and a corresponding one of the second blocks (32B), and
each of the second bridges (162B) connects corresponding two of the second blocks (32B) and a corresponding one of the first blocks (31B).

10. The pneumatic tire (1) according to any one of claims 5 to 9 wherein
each of the first bridges (161) has a first sipe (68) in a vicinity of a boundary with a corresponding one of the first blocks (31), and
each of the second bridges (162) has a second sipe (69) in a vicinity of a boundary with a corresponding one of the second blocks (32).
